Europäisches Patentamt

European Patent Office

Office européen des brevets

(19)

(11) EP 0 812 080 B1

(12) **FASCICULE DE BREVET EUROPEEN**

(45) Date de publication et mention
de la délivrance du brevet:
**11.05.2005 Bulletin 2005/19**

(51) Int Cl.⁷: **H04L 7/04**

(21) Numéro de dépôt: **97401242.9**

(22) Date de dépôt: **04.06.1997**

(54) **Dispositif autonome, notamment dispositif médical implantable actif, et son programmateur externe à transmission synchrone**

Autonome Vorrichtung, insbesondere aktive implantierbare Vorrichtung und ihr externes Programmiergerät für synchrone Übertragung

Autonomous apparatus, especially active implantable medical apparatus, and its external synchronous transmission programmer

(84) Etats contractants désignés:
**BE CH DE FR GB IT LI SE**

(30) Priorité: **04.06.1996 FR 9606824**

(43) Date de publication de la demande:
**10.12.1997 Bulletin 1997/50**

(73) Titulaire: **ELA MEDICAL (Société anonyme)**
**92541 Montrouge (FR)**

(72) Inventeurs:
• **Lee, Chik yam**
**94110 - Arcueil (FR)**
• **Deschamp, Hervé**
**92150 - Suresnes (FR)**

(74) Mandataire: **Dupuis-Latour, Dominique et al**
**SEP Pagenberg & Associés**
**14 boulevard Malesherbes**
**75008 Paris (FR)**

(56) Documents cités:
EP-A- 0 084 787        EP-A- 0 342 460
US-A- 4 701 939       US-A- 4 918 406
US-A- 5 314 450       US-A- 5 384 828
US-A- 5 448 571

• DARNELL M ET AL: "A NOVEL DSP-BASED DATA SYNCHRONISATION TECHNIQUE" PROCEEDINGS OF THE INTERNATIONAL CONFERENCE ON COMMUNICATIONS (ICC), GENEVA, MAY 23 - 26, 1993, vol. 1 - 2 - 03, 23 mai 1993, INSTITUTE OF ELECTRICAL AND ELECTRONICS ENGINEERS, pages 821-825, XP000371198
• PATENT ABSTRACTS OF JAPAN vol. 014, no. 512 (P-1129), 9 novembre 1990 & JP 02 213968 A (FUJI ELECTRIC CO LTD), 27 août 1990,

**Description**

La présente invention concerne le domaine des dispositifs autonomes, notamment les dispositifs médicaux implantés actifs, et plus particulièrement l'échange de données pendant les séquences de communication entre le dispositif autonome et une console de contrôle extérieure.

Les dispositifs médicaux implantés actifs comprennent notamment les stimulateurs cardiaques, les défibrillateurs, les appareils neurologiques, les pompes de diffusion de substances médicales et les implants cochléaires.

L'invention n'est cependant pas limitée aux dispositifs médicaux implantés actifs et, bien que dans la suite on fera référence à ces derniers, l'invention s'applique aussi bien à des dispositifs médicaux non implantés (par exemple portés par le patient) ou non actifs (par exemple des dispositifs, implantés ou non, dépourvus de source d'énergie propre et utilisant pour l'émission de messages vers l'extérieur une fraction de l'énergie du signal d'interrogation qui leur est appliqué), ou même à des dispositifs autonomes autres que médicaux. La référence à un "implant" dans la description n'est donc pas en elle-même limitative.

Ces appareils, une fois mis en place, sont programmés de l'extérieur au moyen d'une console distante appelée "programmateur". La vérification des paramètres de l'implant ou la transmission d'informations enregistrées par celui-ci s'effectue par voie électromagnétique, technique appelée "télémétrie" dans le domaine en question. Cette console est munie d'un organe récepteur qui est placé en regard du site de l'implant et qui comprend une bobine qui capte le champ magnétique en provenance de l'appareil implanté.

Inversement, le programmateur est susceptible d'envoyer des informations vers l'implant par voie électromagnétique, en faisant osciller des courants dans une bobine du programmateur, ce qui va provoquer une apparition de tensions aux bornes de la bobine de réception de l'implant ; ces tensions sont captées et décodées par l'implant. Inversement, les signaux émis par l'implant sont captés par la bobine, amplifiés, filtrés, numérisés et décodés, ce qui permet de réaliser ainsi une transmission dans les deux sens entre implant et programmateur.

L'un des buts de l'invention est de permettre un tel échange de données entre implant et programmateur avec une vitesse de transmission élevée et un degré de fiabilité maximal.

A cet effet, l'invention propose un moyen pour établir une transmission série synchrone entre implant et programmateur et pour maintenir le synchronisme tout au long de l'échange de données.

On a déjà proposé d'opérer des transmissions de données en mode synchrone entre un implant et un programmateur ; le programmateur possède une horloge propre qui définit le rythme de transmission des données, rythme qui est imposé à l'implant lorsque celui-ci doit émettre des données en direction du programmateur. Cette technique, si elle permet de bénéficier des avantages d'une transmission synchrone, est néanmoins limitée dans ses possibilités de mise en oeuvre car elle pré-suppose que l'implant soit en mesure d'établir et de maintenir la cadence de transmission imposée par le programmateur. En pratique, il est indispensable de limiter la vitesse de transmission si l'on veut que cette condition soit remplie de façon quasi-certaine quel que soit l'implant interrogé par le programmateur.

En d'autres termes, il est nécessaire de trouver un compromis entre la vitesse de la transmission synchrone et la sécurité de transmission, une vitesse trop élevée risquant d'entraîner une perte du synchronisme en cours de transmission, et donc l'interprétation erronée par le programmateur des données transmises.

L'invention propose de pallier cette limitation par un nouveau moyen d'établissement et de maintien du synchronisme de la transmission.

On connaît une technique, enseignée notamment par le US-A-4 701 939, consistant, au lieu d'aligner le rythme de transmission des données par l'implant sur une fréquence imposée par le programmateur, à prévoir pour le programmateur une horloge programmable, ajustable et en phase, et synchroniser cette horloge programmable sur l'horloge de l'implant. Ce dernier sera alors libre d'émettre des données à sa fréquence propre, qui pourra être supérieure aux fréquences typiquement utilisées jusqu'à présent, le programmateur venant se synchroniser sur cette fréquence sur laquelle il se verrouillera par un recalage périodique, effectué en temps réel.

On comprendra également que cette manière de procéder permet de simplifier les circuits de l'implant, avec un abaissement corrélatif du coût de celui-ci, l'accroissement de complexité des circuits étant reporté du côté du programmateur. En d'autres termes, on peut accroître notablement les performances techniques de l'implant pour un coût équivalent, voire à moindre coût.

Mais la technique enseignée par ce document, si elle permet de trouver initialement une synchronisation entre les deux appareils, ne permet pas de corriger des écarts de synchronisme indifféremment dans un sens ou dans l'autre (avance ou retard), et impose donc le recours à des horloges très précises et/ou une durée limitée pour l'échange des informations.

Pour résoudre cette difficulté, l'invention propose un ensemble programmateur + implant du type général enseigné par le US-A-4 701 939 tel que décrit par le préambule de la revendication 1, et comportant les éléments originaux énoncés par la partie caractérisante de cette revendication 1. La revendication 5 vise, quant à elle, le programmateur en tant que tel et les sous-revendications 1-4 et 6-8 visent des mises en oeuvres avantageuses.

On va maintenant décrire un procédé de mise en oeuvre de l'invention.

La figure 1 est un schéma par blocs de l'implant et des circuits de réception et de traitement des signaux du programmateur.

La figure 2 est un ensemble de chronogrammes illustrant l'intérêt d'une transmission synchrone.

La figure 3 illustre les risques d'erreur dans l'interprétation des signaux de la figure 2 en cas de défauts de synchronisme.

La figure 4 illustre le principe de resynchronisation utilisé par la présente invention.

La figure 5 illustre le mode d'accès asynchrone, en lecture et écriture simultanées, de la mémoire FIFO utilisée par l'invention.

La figure 6 illustre la dépendance entre l'horloge programmable et les signaux de contrôle du convertisseur analogique/numérique.

Les figures 7 et 8 illustrent l'étape, mise en oeuvre par le procédé de l'invention, de corrélation de la trame de synchronisation avec un motif de référence.

La figure 9 représente, dans le repère temporel du programmateur, l'analyse faite par celui-ci pour déterminer le déphasage entre son horloge et celle de l'implant.

La figure 10 est une série de chronogrammes présentant la manière dont sont effectués sous formes de trames les échanges de données selon l'invention.

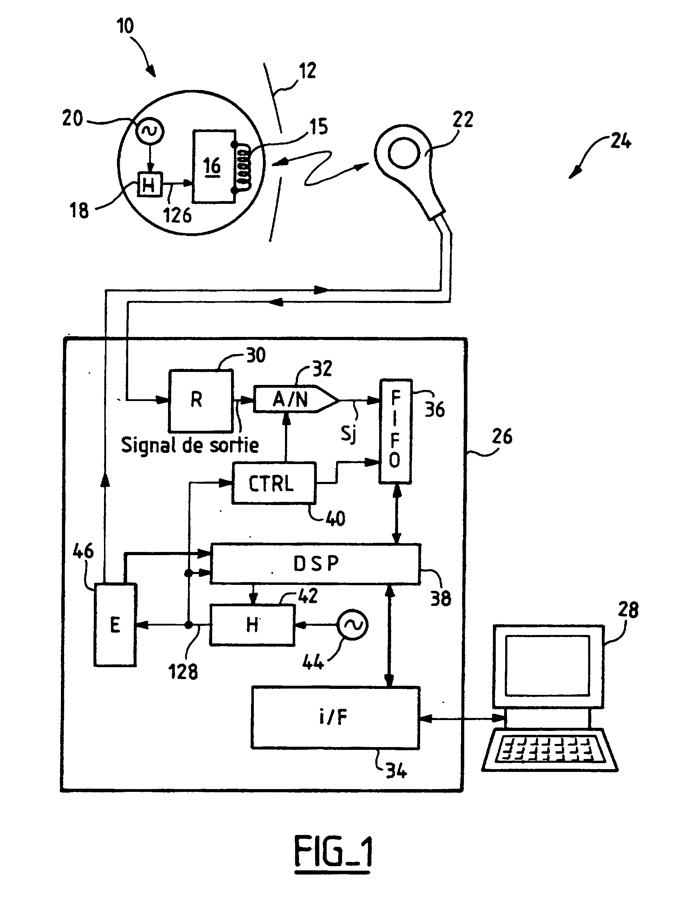

Sur la figure 1, la référence 10 désigne un "dispositif autonome" au sens large défini plus haut, dans cet exemple un dispositif médical implanté chez un patient, dont on a symbolisé en 12 la barrière cutanée. L'implant comporte un boîtier 14 contenant divers circuits électroniques, avec notamment une mémoire conservant des informations qui peuvent être transmises à l'extérieur ou mises à jour par "télémétrie" bidirectionnelle, en faisant varier une induction magnétique provoquée par le passage de courants oscillants dans une bobine 15. Le circuit électronique 16 opère sous le contrôle temporel d'une horloge intégrée 18, elle-même pilotée par un oscillateur 20.

Les signaux émis par l'implant 10, qui sont de nature essentiellement magnétique comme expliqué plus haut, sont recueillis par l'organe récepteur 22 ou "tête de programmation" d'un programmateur 24, qui est par exemple un dispositif d'un type comparable à celui décrit dans le EP-A-0 661 077 auquel on pourra se reporter pour de plus amples détails sur la manière dont les signaux sont recueillis ou traités. L'organe 22 peut également opérer en émetteur, pour la transmission de signaux du programmateur 24 vers l'implant 10.

*Structure d'ensemble du programmateur*

Le programmateur comporte essentiellement, outre la tête 22, un boîtier 26 comprenant l'ensemble des circuits d'émission/réception et de traitement des signaux ainsi que d'interfaçage avec une unité de traitement 28, généralement sous forme d'un micro-ordinateur connecté au boîtier 26. Les données peuvent être échangées entre le programmateur et le micro-ordinateur 28 sur un bus à la norme PCMCIA, ce qui permet d'utiliser pour le micro-ordinateur n'importe quel type de machine comportant un port conforme à ce standard.

Plus précisément, le boîtier 26 comporte un circuit 30 de réception des signaux captés par la tête 22 en provenance de l'implant 10 et comprenant l'ensemble des étages de traitement analogique du signal assurant l'amplification, la mise en forme, le filtrage, etc. du signal capté (on pourra se référer au EP-A-0 661 077 précité pour plus de détails sur ces traitements).

Le circuit 30 délivre un signal que l'on appellera SIGNAL-DE-SORTIE à un convertisseur analogique/numérique 32 qui délivre en sortie un ensemble d'échantillons de signal $S_j$. Ces échantillons $S_j$ sont analysés, via une mémoire FIFO 36 dont on expliquera le rôle et le fonctionnement plus en détail par la suite, par une unité de calcul et de contrôle séquentiel programmable 38, avantageusement réalisée sous la forme d'un processeur numérique de signal (DSP).

Les DSP sont en effet réputés pour leur aptitude à effectuer aisément des calculs tout en sachant adresser des périphériques, le tout sous le contrôle d'un programme.

Le remplissage de la mémoire FIFO 36 est séquencé par un circuit de contrôle 40, tandis que sa lecture peut être effectuée de façon asynchrone par le DSP 38.

Ce programme peut être contenu dans une mémoire de type ROM, PROM ou RAM, de manière en elle-même classique et non décrite ici.

Néanmoins, afin de garder à la présente invention la souplesse de fonctionnement et d'évolution propre aux systèmes contrôlés par programme, on peut prévoir de télécharger le programme de contrôle du DSP 38 depuis le micro-ordinateur 28, la mémoire de programme du DSP 38 étant alors essentiellement une mémoire RAM, avec simplement une ROM contenant un programme d'amorçage pour le contrôle du téléchargement de la RAM depuis le micro-ordinateur 28 ainsi qu'un programme de secours pour commuter l'implant en mode nominal même si la commutation entre le programmateur 26 et le micro-ordinateur 28 est défaillante.

Une telle manière de procéder permet de faire évoluer dans le temps le comportement du dispositif selon l'invention, par exemple pour l'adapter à des implants de types non encore définis, sans autre modification pour l'utilisateur que l'installation d'une version nouvelle du programme dans le micro-ordinateur 28.

Le téléchargement du programme permet ainsi d'apporter des modifications sans changement de la tête ou du programmateur, simplement par diffusion d'une disquette de mise à jour, alors que jusqu'à présent une telle mise à jour requérait l'ouverture de la tête de programmation et le changement d'un composant matériel (EPROM).

Le boîtier 26 contient en outre une horloge 42, elle-même pilotée par un oscillateur 44. De façon caractéristique de l'invention, l'horloge 42 est une horloge de type programmable.

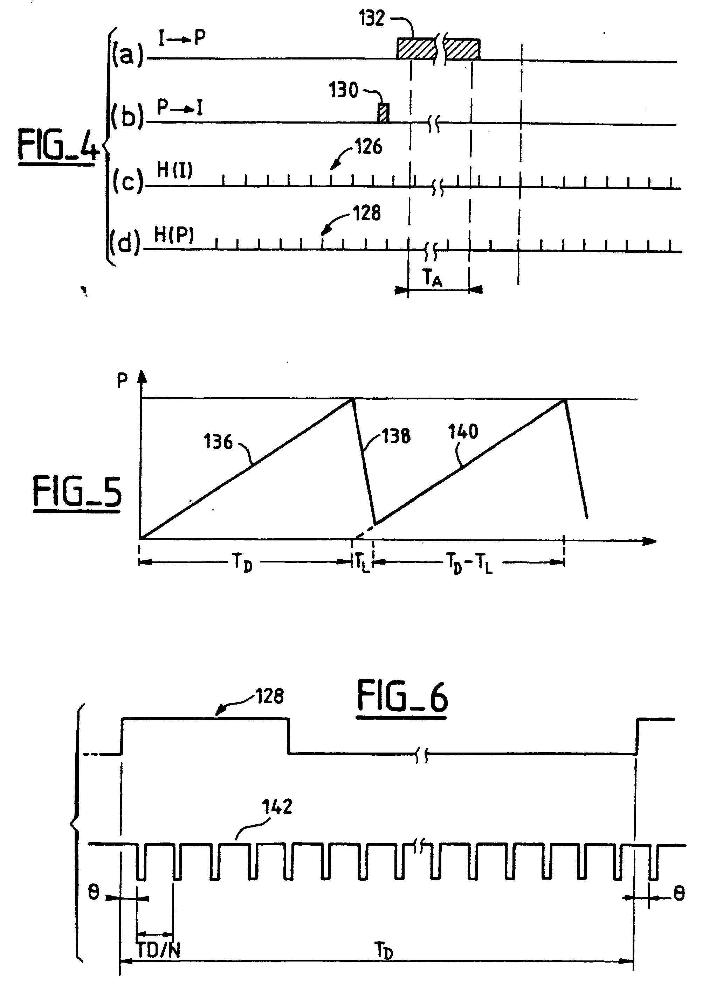

Comme on le verra plus bas en référence à la figure 6, l'horloge de numérisation (142 sur la figure 6) est synchronisée par l'horloge de séquencement (128 sur la figure 6) et sa fréquence est un multiple entier de la fréquence de cette dernière.

Le boîtier 26 contient également un circuit d'émission 46 également séquencé par l'horloge 128 et qui opère sous le contrôle du DSP 38. Ce circuit d'émission provoque le passage de courants oscillants dans une bobine contenue dans la tête 22 de manière à assurer la transmission d'informations du programmateur vers cet implant.

On peut ainsi établir une communication bidirectionnelle entre implant et programmateur. L'ordre et le type des messages échangés entre l'implant et le programmateur, dans un sens ou dans l'autre, peuvent être déterminés, si les couches supérieures du protocole sont concernées, par le micro-ordinateur 28, dont les instructions sont lues, via l'interface 34, par les éléments de calcul et de contrôle du DSP 38. En particulier, c'est depuis le micro-ordinateur 28 que sera envoyé l'ordre de débuter une communication bidirectionnelle entre programmateur et implant ; lorsque commence cette communication, et jusqu'à ce qu'elle se termine, les messages se succèdent selon différentes étapes dont l'ensemble constitue une "session". Pour que les deux systèmes puissent coopérer convenablement, il est nécessaire de prévoir un protocole de communication définissant le format et le sens des messages.

La caractéristique essentielle de l'invention est de pouvoir opérer une transmission synchrone entre le programmateur et l'implant. Plus précisément, l'implant et le programmateur possèdent chacun, comme on l'a indiqué, une horloge, respectivement 18 et 42, servant de base de temps et dont la fréquence est typiquement de 32 768 Hz.

Si les deux horloges 18 et 42 sont en phase et que leurs transitions servent d'origine des temps pour l'envoi et la réception des symboles (unités d'information) constituant les messages, alors l'analyse de ces symboles sera facilitée par rapport au cas où le programmateur et l'implant ignorent mutuellement l'état de leurs bases de temps. Outre la plus grande fiabilité du décodage des symboles, on pourra opérer la transmission à une cadence plus élevée, permettant ainsi de réduire la durée de transmission et/ou de transmettre un volume plus grand de données - ce qui est particulièrement intéressant lorsque l'on procède à des enregistrements de données sur une très longue période (enregistrements Holter).

*Établissement du synchronisme entre implant et programmateur*

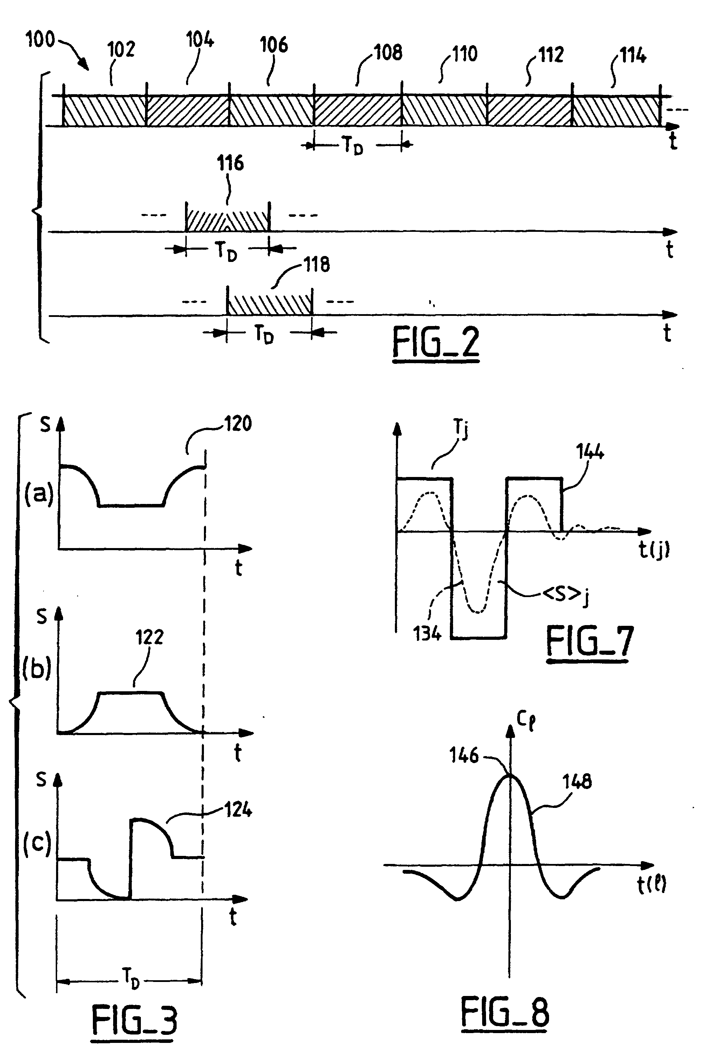

La figure 2 illustre l'intérêt du synchronisme entre le système émetteur et le système récepteur pour un décodage correct des symboles émis.

L'émetteur envoie vers le récepteur un message 100 constitué de symboles 102, 104, ... 114, ..., et la tâche du récepteur consiste à analyser des symboles successifs et les reconnaître, afin de déchiffrer correctement le message.

Si l'on désigne $T_D$ le temps nécessaire à l'émetteur pour émettre un symbole, si le récepteur analyse le message pendant une durée $T_D$ mais qu'il n'est pas synchronisé, l'analyse va porter sur la succession de deux symboles, comme illustré en 116 sur la seconde ligne du chronogramme de la figure 2. En revanche, si le récepteur est en synchronisme avec l'émetteur, l'analyse portera sur un seul symbole, comme illustré en 118 sur la troisième ligne du chronogramme de la figure 2. Seule une synchronisation correcte permet d'utiliser correctement la durée $T_D$ pour analyser le message, ce que l'on va expliquer en référence à la figure 3.

Supposons que l'"alphabet" (l'ensemble des symboles susceptibles d'intervenir dans une transmission) soit un alphabet de deux symboles 120 et 122 illustrés en (a) et (b) sur la figure 3. Si l'analyse débute en même temps que l'apparition du symbole, la reconnaissance de ce dernier sera possible ; en revanche, un temps d'analyse identique, mais mal localisé, pourra fournir un symbole n'appartenant pas à l'alphabet, comme illustré en (c) sur la figure 3, où l'on a représenté en 124 un message comportant un symbole 122 suivi d'un symbole 120 : si l'on analyse ce message sur une durée $T_D$ retardée par rapport au début du symbole 120, on obtient le symbole 124 qui n'appartient pas à l'alphabet.

Lorsque l'on opère une transmission non synchrone, on doit, de manière en elle-même connue, opérer l'analyse sur une durée supérieure à $T_D$, avec au besoin un accroissement du temps inter-symbole et il en coûte par rapport à une situation de synchronisme une augmentation des moyens de calculs et une perte de la vitesse de transmission.

Si $T_D$ est le temps entre symboles et N le nombre de symboles dans l'alphabet, le débit de la transmission, en bit/s sera : $D = (1/T_D) \log_2(N)$.

On va maintenant exposer le principe de mise en synchronisme mis en oeuvre par la présente invention, en référence à la figure 4.

En (a) on a représenté les messages émis de l'implant vers le programmateur, en (b) les messages émis du programmateur vers l'implant, en (c) les impulsions de l'horloge séquençant l'implant et en (d) les impulsions d'horloge séquençant le programmateur, ces deux horloges opérant à une fréquence $F_o$. Les deux horloges établissant le séquencement des messages, on a alors $F_o = 1/T_D$.

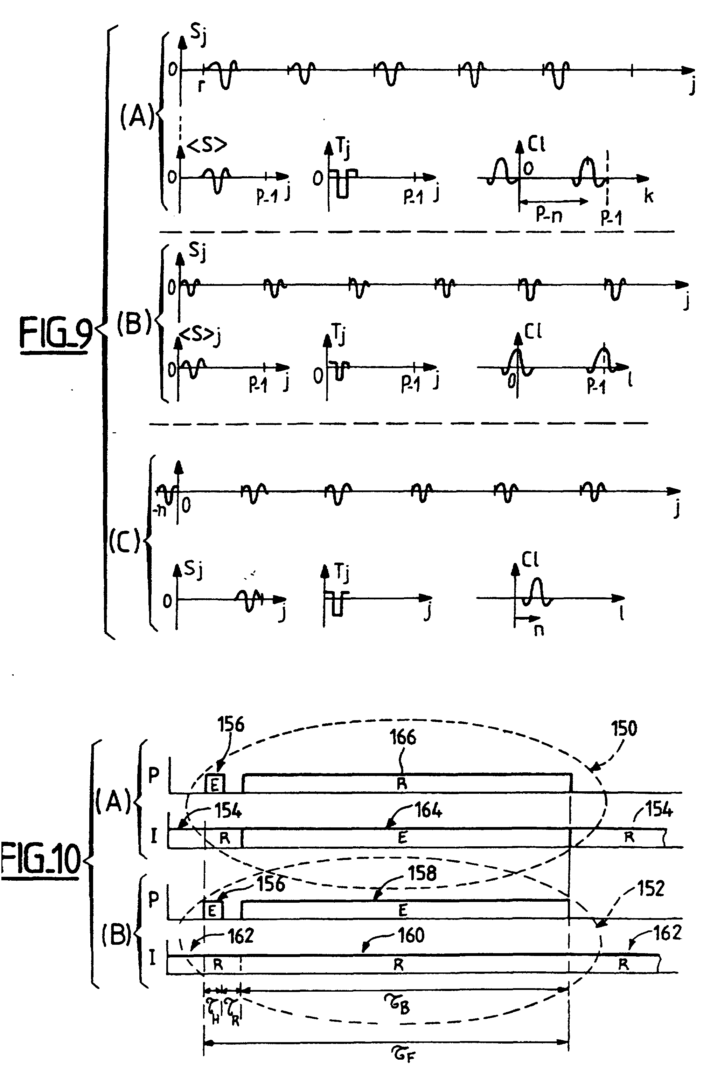

Si l'on considère le programmateur et l'implant avant qu'ait été échangé des données entre eux, leurs horloges ne peuvent avoir de relation de phase entre elles. Pour établir cette relation de phase, le programmateur émet une requête 130 vers l'implant, cette requête étant conçue pour être compréhensible par l'implant sans qu'il soit besoin d'un synchronisme préalable. A cette requête, l'implant répond en émettant un message 132, séquencé par son horloge propre 126. Le message 132, que l'on appellera par la suite "trame de synchronisation" sera avantageusement constitué par la répétition d'un même symbole, ce symbole pouvant être généré en réalisant dans l'implant l'excitation d'une bobine par des moyens de commande appropriés (non illustrés car connus dans la technique), excitation qui produira un courant électrique, donc une induction magnétique. Celle-ci est captée par le programmateur ; après traitement, le signal utile (f.é.m. aux bornes de la bobine du programmateur) apparaissant à l'entrée du convertisseur aura une forme qui correspond typiquement à celle illustrée en 134 sur le figure 7.

La durée $T_S$ de ce signal correspond avantageusement à une fréquence $F_S = 1/T_S$ égale à 128 kHz.

Le signal SIGNAL-DE-SORTIE est avantageusement analysé par le DSP 38 après numérisation par le convertisseur 32, qui fournit une valeur numérisée $S_j$, avantageusement sur 8 bits.

Le signal $S_j$, avant d'être analysé par le DSP 38 est avantageusement stocké dans la mémoire FIFO 36, qui, comme on le sait, présente la particularité d'être accessible de façon asynchrone en lecture et écriture simultanées. Le mode d'accès à la FIFO 36 est illustré sur la figure 5 : si, au cours d'une fenêtre d'analyse de durée $T_D$, les moyens de calcul 38 analysent P échantillons du signal $S_j$, il est alors possible de laisser au cours d'une phase 136 la mémoire FIFO se remplir de P valeurs, capturées à intervalles réguliers selon un séquencement judicieusement effectué par les moyens de contrôle 40 pilotant le signal d'écriture dans la mémoire FIFO 36. A la fenêtre d'analyse suivante, le DSP 38 peut alors commencer par lire, dans une phase 138, les P valeurs contenues dans la mémoire FIFO 36, alors que cette dernière continue à se remplir, au cours d'une phase 140, de P autres valeurs. On comprend que le DSP 38 peut ainsi lire en une phase continue les P échantillons $S_j$ dont il a besoin, et les traiter ensuite sans interruption, évitant ainsi les complications de traitement et les pertes de temps inhérentes à un système qui n'utiliserait pas de mémoire FIFO et dans lequel, à chaque arrivée d'une nouvelle valeur de signal, il serait nécessaire de provoquer une interruption des opérations en cours d'exécution dans le DSP 38 pour pouvoir prendre en compte cette nouvelle valeur.

Le signal d'horloge 128 du programmateur est lui-même produit par la division, par un entier M, du signal produit par l'oscillateur 44, qui est par exemple un oscillateur accordé à une fréquence de résonance $F_{osc}$ de 4194 304 Hz. La division est effectuée par le circuit 42 qui, contrôlé par le DSP 38, possède la particularité de pouvoir avancer ou retarder la phase du signal d'horloge délivré en sortie (horloge dite "programmable").

Les fronts montants du signal d'horloge 128 servent d'instant de référence pour le circuit 40 de contrôle du convertisseur 32.

La figure 6 illustre la manière dont ces moyens 40 opèrent en fonction du signal d'horloge 128. Le signal en sortie de l'oscillateur 44 est divisé par un entier N afin de fournir un signal 142 à une fréquence $F_e = F_{osc}/N$, que l'on appellera par la suite "fréquence d'échantillonnage".

Par ailleurs, le signal d'horloge 128 est lui-même le résultat de la division du signal de l'oscillateur 44 par un entier M. En choisissant M et N tels qu'il existe un entier P réalisant l'égalité $M = P.N$, on aura donc P périodes de l'horloge 142 durant une période de l'horloge 128, soit $F_e = P/T_D$.

Si le circuit de contrôle 40 produit une première transition de l'horloge 142 à un instant distinct de celui du front montant de l'horloge 128, avec un décalage temporel $\theta$, alors la $(P + 1)^{\text{ème}}$ transition de l'horloge 142 arrivera à l'instant $\theta + (P/F_e) = \theta + T_D$, c'est-à-dire un temps $\theta$ après le front montant suivant de l'horloge 128, qui est alors bien verrouillée en phase avec l'horloge 142.

Si l'on note j le numéro de la transition de l'horloge 142 après un front montant de l'horloge 128, et que les transitions de l'horloge 142 servent à déclencher les numérisations de SIGNAL-DE-SORTIE par le convertisseur 32, on obtient en sortie de ce convertisseur une série de signaux $S_j$ égaux, à l'erreur de numérisation près, aux valeurs de SIGNAL-DE-SORTIE aux instants j.

Pour réaliser la synchronisation, le DSP 38 réalise tout d'abord l'opération de moyennage du signal sur un nombre entier K de fenêtres de durée $T_D$, soit pendant un temps $T_A = K.T_D$.

On crée alors une série de valeurs $\langle S \rangle_j$ définies par :

$$\langle S\rangle_j = (1/K) \sum_{i=0}^{K-1} S_{(j+P.i)} \, , \qquad j \in [0 \dots P\text{-}1]$$

En opérant dans la trame de synchronisation, où le symbole est répétitif, cette opération vise uniquement à diminuer l'amplitude relative du bruit par un facteur $\sqrt{K}$.

Le signal $\langle S\rangle_j$ aura alors la forme déjà illustrée en 134 sur la figure 7, à la numérisation près.

Ce signal pourra être jugé assez ressemblant à un motif $T_j$, illustré en 144 sur la figure 7, que le système utilisera pour corrélation avec $\langle S\rangle_j$, selon l'opération :

$$C_l = \sum_{j=0}^{P\text{-}l\text{-}1} T_j \langle S\rangle_{j+l} + \sum_{j=P\text{-}l}^{P\text{-}1} T_j \langle S\rangle_{j+l\text{-}P} \, , \qquad l \in [0 \dots P\text{-}1]$$

$T_j$ désignant le $j^{ème}$ point du motif 144. $C_l$ est alors le $l^{ème}$ point de la fonction de corrélation de $\langle S\rangle$ et T.

L'équation ci-dessus est séparée en deux sommes, afin de garder les indices sur $\langle S\rangle$ compris dans l'intervalle $[0 \dots P\text{-}1]$, ce qui revient à calculer la corrélation de T avec le prolongement par périodicité de $\langle S\rangle$, que l'on désignera $\langle S^{\sim}\rangle$.

Plus le motif T est semblable à $\langle S^{\sim}\rangle$ plus la fonction K est semblable à la fonction d'auto-corrélation $\langle S\rangle * \langle S^{\sim}\rangle$. Or on sait que la fonction d'auto-corrélation $[\langle S^{\sim}\rangle * \langle S^{\sim}\rangle]_l$ est maximale pour $l = 0$, et que la fonction de corrélation $\langle S_n^{\sim}\rangle_j = \langle S^{\sim}\rangle_{j+n}$ est maximale pour $l = -n$.

En d'autres termes, la position du maximum 146 de la fonction de corrélation 148, illustrée figure 8, entre une fonction à support borné $\langle S\rangle$ et la translatée de son prolongement par périodicité indique la grandeur de la translation.

C'est cette propriété que la présente invention utilise pour réaliser la synchronisation des horloges entre le programmateur et l'implant, ce qu'illustrent les figures 7, 8 et 9.

Si le motif $T_j$ est avantageusement choisi pour présenter une forte ressemblance avec le signal numérisé et moyenné $\langle S\rangle_j$, alors la fonction de corrélation $C_l$ (148 sur la figure 8) précédemment définie aura son maximum (146 sur la figure 8) placé en $l = 0$ lorsque $T_j$ et $\langle S\rangle_j$ seront en coïncidence, ce qui correspond à la configuration des figures 7 et 8.

La figure 9 représente, dans le repère temporel du programmateur, l'analyse faite par celui-ci pour déterminer le déphasage entre son horloge (128, figure 4) et celle de l'implant (126, figure 4).

Dans le cas (A) de la figure 9, l'horloge de l'implant présente un retard de phase par rapport à celle du programmateur, retard dont on désignera la grandeur par n, l'unité de temps étant la période d'échantillonnage $1/F_e$. Les symboles constituant la trame de synchronisation commençant à chaque nouvelle transition de l'horloge de l'implant, l'ensemble des points $\langle S\rangle_j$ ($j \in [0 \dots P\text{-}1]$) constituant la moyenne des symboles de la trame de synchronisation apparaîtra lui aussi retardé de n. La fonction de corrélation avec Tj présentera donc son maximum en -n ou en P-n, si cette fonction de corrélation, périodique de période P comme cela pourra être aisément calculé, est analysée dans l'intervalle $[0 \dots P\text{-}1]$.

Dans le cas (B) de la figure 9, les deux horloges 126 et 128 sont en phase et le maximum de la fonction de corrélation avec le motif de référence de $\langle S\rangle_j$ est en $l = 0$.

Si, à l'inverse du cas (A), l'horloge 126 est en avance de phase par rapport à l'horloge 128, ce qui correspond au cas (C), le maximum de ladite fonction de corrélation sera situé en $l = +n$ (le maximum étant situé en $l = -n$ dans le cas d'un retard de phase).

Il suffit donc au DSP 38, pour rétablir l'égalité de la phase entre les horloges 126 et 128 (figure 4), de rechercher par le calcul le maximum de la fonction de corrélation $C_l$ et d'imposer à l'horloge programmable 42 un retard égal à la position de ce maximum.

On notera toutefois que les conclusions qui précèdent ne sont strictement exactes que si les deux horloges 126 et 128 sont exactement de même fréquence, c'est-à-dire si l'on a $F_o = F_{osc}/M = 1/T_D$.

Si au contraire il existe une légère différence de fréquence, ce qui est en pratique toujours le cas lorsque deux oscillateurs évoluent de façon indépendante, alors on peut écrire $F_I = F_P(1+\varepsilon)$, où $F_I$ désigne la fréquence de l'horloge 126 de l'implant et $F_P$ celle de l'horloge 128 du programmateur.

On sait que, si $\varepsilon \ll 1$, alors le déphasage d'une fenêtre complète de période $T_D$ réapparaîtra au bout d'un temps de l'ordre de $T_D/\varepsilon$, soit $1/\varepsilon$ fenêtres.

Si les horloges 126 et 128 sont, avantageusement, produites par des oscillateurs à quartz, alors $\varepsilon$ sera de

l'ordre de $10^{-4}$. De la sorte, si la trame de synchronisation comporte $10^2$ émissions du même symbole, le déphasage entre la première et la dernière émission sera de l'ordre de $10^{-2}$ fenêtres de durée $T_D$ et pourra être négligé dans la présente application, où la période d'échantillonnage sera avantageusement égale à $1/F_e = 1/(32T_D)$ : dans ce cas, le déphasage relatif entre les horloges 126 et 128 sera de l'ordre d'un tiers de cette période après une trame de synchronisation complète.

*Structure des messages échangés une fois la synchronisation établie*

Avantageusement, dans la présente invention, les messages échangés aussi bien du programmateur vers l'implant que de l'implant vers le programmateur le sont par groupe de sous-messages appelés "trames".

En raison de l'énergie disponible en tant que de besoin dans le programmateur par rapport à l'implant, le rapport signal/bruit dans le sens programmateur → implant peut être beaucoup plus important que dans l'autre sens, et la transmission programmateur → implant peut se faire en codant les bits par la présence ou l'absence de signal dans une fenêtre temporelle prédéterminée. Si le programmateur et l'implant ont été précédemment synchronisés, la fenêtre temporelle pourra être réduite à la période $T_d$ des horloges 18 et 42, respectivement de l'implant et du programmateur, conférant ainsi la même vitesse dans le sens programmateur → implant que dans l'autre sens, ce qui constitue une caractéristique originale de l'invention par rapport aux systèmes connus, dans lesquels la transmission implant → programmateur est généralement la plus rapide.

Les trames définissent les instants où l'envoi de symboles par le programmateur et l'implant sont autorisées, ces trames étant opérantes après que la synchronisation entre les deux appareils soit établie.

La figure 10 présente la manière dont sont effectués les échanges de données conformément à cette mise en trame.

Le cas (A) de la figure 10 correspond à une trame 150 au cours de laquelle les messages vont principalement de l'implant vers le programmateur, le cas (B) correspondant à une trame 152 au cours de laquelle les messages vont principalement dans l'autre sens.

La durée de chaque trame est désignée $\tau_f$ et sera, ainsi que toutes les durées jouant un rôle dans les trames, un multiple entier de la durée $T_D$ des fenêtres d'analyse du programmateur et de l'implant.

Avant que la trame 150 ne débute, on attend que la trame précédente soit terminée. Le programmateur est alors inactif et l'implant dans un mode de réception 154.

Lorsque la trame débute, d'une manière imposée par le programmateur qui sera toujours maître vis-à-vis de l'implant, un en-tête 156 est émis par le programmateur. Cet en-tête contient des informations indiquant à l'implant qu'il doit alors émettre des informations vers le programmateur.

L'en-tête est par exemple formé d'un signal de durée $\tau_H = 4\ T_D$ véhiculant quatre bits et présentant une structure commune à tous les cas de figure (trames 150 aussi bien que 152), avec un bit de démarrage de trame (bit '1', correspondant à une émission toujours présente dans un codage en "tout-ou-rien") suivi de trois bits de message (explicités plus bas).

Si la trame est une trame "programmateur vers implant" (du type 152), après un éventuel temps de repos de durée $\tau_R$, le programmateur émet des signaux dans le champ 158, de durée $\tau_E$, que l'implant reçoit et interprète. Durant l'émission de ce champ par le programmateur, l'implant est alors dans un état de réception 160, de durée $\tau_B$. Après la fin de ce champ 160, l'implant retourne dans un état de réception 162, en attente d'un nouvel en-tête de trame. Les bits étant avantageusement émis dans le champ 158 par la présence ou l'absence d'un signal, et de même dans l'en-tête 156 (codage en "tout-ou-rien"), l'absence de signal reçu par l'implant cessera, dans le champ 162, d'être interprétée comme une donnée.

Si la trame est du type "implant vers programmateur" (trame de type 150), alors l'implant, après un éventuel temps de repos de durée $\tau_R$, va émettre un message vers le programmateur, dans le champ 164. Le programmateur décode alors le message dans le champ 166 de la trame.

Les trois derniers bits de l'en-tête (bits de message) peuvent servir à contrôler les échanges entre le programmateur et l'implant, en particulier pour remédier à des erreurs de transmission détectées par le système.

Ces bits peuvent avantageusement avoir la signification suivante :

| | |
|---|---|
| '111' (imp$^t$ → pgr$^r$) | l'implant va émettre une trame de synchronisation |
| '100' (imp$^t$ → pgr$^r$) | l'implant va envoyer des données au programmateur |
| '010' (pgr$^r$ → imp$^t$) | le programmateur va envoyer des données à l'implant |
| '001' (pgr$^r$ → imp$^t$) | pause |
| '000' (pgr$^r$ → imp$^t$) | fin de session |
| '110' (imp$^t$ → pgr$^r$) | l'implant va renvoyer le même champ de données que dans la trame précédente |

(suite)

| '100' (pgr$^r$ → imp$^t$) | l'implant n'a pas tenu compte de la dernière trame qu'il a reçue et va prendre en compte les données qui vont suivre |
|---|---|
| '011' | non significatif |

On notera que le message '111', qui demande à l'implant d'émettre une trame de synchronisation, est codé de façon à être compris par l'implant sans que la synchronisation ne soit établie. En effet, la détection par l'implant des signaux qu'envoie le programmateur se faisant par détection ou non de la présence de ces signaux durant les fenêtres temporelles de durée $T_D$, la détection d'une requête de trame de synchronisation équivaut à détecter la présence d'un signal par exemple durant une pluralité de fenêtres successives (typiquement, quatre fenêtres successives). En effet, si ces signaux se succèdent avec une période inférieure ou égale à un sous-multiple de $T_D$, quel que soit l'état de synchronisme entre les horloges 126 et 128 de l'implant et du programmateur, l'implant verra la présence d'un signal aux bornes de ses circuits de réception durant au moins quatre (dans l'exemple considéré) de ces fenêtres temporelles et interprétera la présence de ces signaux répétés comme un en-tête comprenant le message '111', ce qui déclenchera de sa part l'envoi d'une trame de synchronisation.

*Resynchronisation en cours de transmission*

On comprendra que les symboles ne peuvent être convenablement décodés que si le programmateur et l'implant ont été préalablement synchronisés, ce décodage étant opéré en évaluant à un instant Ø particulier les fonctions de corrélation.

Mais, lors de la transmission d'une trame de type 150, une fraction de la fenêtre temporelle correspond à un délai de désynchronisation qui apparaît en fin de trame. Comme on l'a vu plus haut, avec des horloges pilotées par des oscillateurs à quartz, le nombre de fenêtres temporelles peut être de l'ordre de la centaine avant que la désynchronisation ne devienne trop importante.

Si $F_I$ est la fréquence de l'horloge 126 séquençant l'implant et $F_P$ celle de l'horloge 128 séquençant le programmateur, et que ces fréquences sont liées par $F_I = F_P(1+\varepsilon)$, avec $\varepsilon \ll 1$, et qu'une trame a une durée de K fenêtres, alors à la fin de celle-ci la désynchronisation est de l'ordre de $K\varepsilon T_D$, où $T_D$ est la durée d'une fenêtre temporelle.

Si la fonction de corrélation entre un symbole et le motif servant à le détecter est maximale au temps Ø en début de trame, elle sera décalée de $K\varepsilon T_D$ par rapport à sa fenêtre de référence à la fin de cette trame. En conséquence, si l'on observe la fonction de corrélation dans une fenêtre de largeur $2K\varepsilon T_D$ centrée en Ø, le maximum de cette fonction appartiendra à la fenêtre en question. Plus précisément, à la j$^{ème}$ cellule observée, le décalage de la fonction de corrélation sera $\Delta_j = j\varepsilon T_D$.

Si le DSP 38 effectue l'opération :

$$\Sigma_\Delta = \sum_{j=0}^{k-1} \Delta_j \, ,$$

on aura alors $\Sigma_\Delta = [K(K-1)/2]\varepsilon T_D$ et, si K est grand, $\Sigma_\Delta = (K^2/2)\varepsilon T_D$.

Le délai $K\varepsilon T_D$ en fin de trame est donc lié à $\Sigma_\Delta$ par la relation $K\varepsilon T_D = (2/K)\,\Sigma_\Delta$.

On comprendra que, si l'on recherche le maximum des fonctions de corrélation dans une fenêtre de largeur $2K\varepsilon T_D$ à chaque fenêtre, et que l'on moyenne les instants des maxima, on obtient alors une quantité qui permet de connaître le déphasage en fin de trame.

Ce déphasage est alors réintroduit dans l'horloge programmable 42 afin d'opérer une resynchronisation, ce qui permet, de façon caractéristique de l'invention, de procéder à la resynchronisation en cours de transmission.

On aura également noté que, si des messages sont transmis vers l'implant dans des trames de type 152 (figure 10) il faudra nécessairement insérer des trames de type 150 dans la transmission, car c'est pendant ces dernières trames que le programmateur aura la possibilité de se resynchroniser sur l'implant.

**Revendications**

1. Un ensemble de dispositifs comprenant, d'une part, un dispositif autonome, notamment un dispositif médical implantable actif et, d'autre part, un appareil formant programmateur externe de ce dispositif autonome, reliés par une liaison d'échange de données série synchrone,

   - le dispositif autonome (10) comprenant :

     · une horloge de séquencement (18),
     · des moyens d'émission de signaux en direction du programmateur, ou de réception de signaux en provenance du programmateur, ces moyens opérant sous le contrôle temporel de l'horloge de séquencement du dispositif autonome, et
     · des moyens pour émettre en direction du programmateur une trame de synchronisation (132) pour établir initialement le synchronisme,

   - le programmateur (24) comprenant :

     · une horloge de séquencement programmable (42), ajustable en phase,
     · des moyens d'émission de signaux en direction du dispositif autonome, ou de réception de signaux en provenance du dispositif autonome, ces moyens opérant sous le contrôle temporel de l'horloge de séquencement du programmateur, et
     · des moyens de contrôle de synchronisation (32, 36, 38, 40) coopérant avec l'horloge de séquencement programmable, propres à analyser la trame de synchronisation (132) reçue du dispositif autonome et à verrouiller en phase cette horloge de séquencement programmable sur l'horloge de séquencement du dispositif autonome,

   ensemble **caractérisé en ce que** :

   - la liaison d'échange de données entre dispositif autonome et programmateur est une liaison bidirectionnelle,
   - la trame de synchronisation (132) comporte un signal répétitif ($S_j$), et
   - les moyens de contrôle de synchronisation du programmateur (32, 36, 38, 40) comportent des moyens pour calculer une corrélation entre le signal répétitif ($S_j$) reçu et un motif de référence ($T_j$), en déduire un décalage (1) en avance ou en retard, et décaler l'horloge programmable d'une valeur correspondant à ce décalage.

2. L'ensemble de la revendication 1, dans lequel la trame de synchronisation (132) est émise par le dispositif autonome en réponse à un signal d'interrogation (130) émis par le programmateur, ce signal d'interrogation étant reconnaissable par le dispositif autonome même en l'absence de synchronisme de la transmission.

3. L'ensemble de la revendication 1, dans lequel les moyens de contrôle de synchronisation du programmateur comportent des moyens pour moyenner le signal répétitif avant corrélation avec le motif de référence.

4. L'ensemble de la revendication 1, dans lequel, pour maintenir le synchronisme une fois celui-ci établi, les moyens de contrôle de synchronisation du programmateur comportent des moyens pour recevoir une trame de données émise par le dispositif autonome, corréler le prolongement par périodicité d'un échantillon du signal reçu ($<S>_j$) avec un motif de référence, en déduire un décalage temporel (1) et recaler l'horloge programmable d'une valeur correspondant à ce décalage.

5. Un programmateur externe pour un dispositif autonome (10), notamment un dispositif médical implantable actif (10), relié au programmateur par une liaison d'échange de données série synchrone, le dispositif autonome comprenant :

   - une horloge de séquencement (18),
   - des moyens d'émission de signaux en direction du programmateur, ou de réception de signaux en provenance du programmateur, ces moyens opérant sous le contrôle temporel de l'horloge de séquencement du dispositif autonome, et
   - des moyens pour émettre en direction du programmateur une trame de synchronisation (132) pour établir initialement le synchronisme,

le programmateur comprenant :

- une horloge de séquencement programmable (42), ajustable en phase,
- des moyens d'émission de signaux en direction du dispositif autonome, ou de réception de signaux en provenance du dispositif autonome, ces moyens opérant sous le contrôle temporel de l'horloge de séquencement du programmateur, et
- des moyens de contrôle de synchronisation (32, 36, 38, 40) coopérant avec l'horloge de séquencement programmable, propres à analyser la trame de synchronisation (132) reçue du dispositif autonome et à verrouiller en phase cette horloge de séquencement programmable sur l'horloge de séquencement du dispositif autonome,

programmateur **caractérisé en ce que** les moyens de contrôle de synchronisation du programmateur (32, 36, 38, 40) comportent des moyens pour calculer une corrélation entre un signal répétitif ($S_j$) contenu dans la trame de synchronisation (132) et un motif de référence ($T_j$), en déduire un décalage (I) en avance ou en retard, et décaler l'horloge programmable d'une valeur correspondant à ce décalage.

6. Le programmateur de la revendication 5, dans lequel, pour maintenir le synchronisme une fois celui-ci établi, les moyens de contrôle de synchronisation comportent des moyens pour recevoir une trame de données émise par le dispositif autonome, corréler le prolongement par périodicité d'un échantillon du signal reçu ($<S>_j$) avec un motif de référence, en déduire un décalage temporel (I) et recaler l'horloge programmable d'une valeur correspondant à ce décalage.

7. Le programmateur de la revendication 5, dans lequel les moyens de contrôle de synchronisation sont mis en oeuvre par un circuit numérique programmable (38), notamment un processeur numérique de signal, opérant sous le contrôle d'un programme chargé dans une mémoire.

8. Le programmateur de la revendication 7, dans lequel le programme de contrôle du circuit numérique est un programme téléchargé, de manière à pouvoir modifier ce programme sans modification matérielle du programmateur.

## Patentansprüche

1. Anordnung von Vorrichtungen, die einerseits eine autonome Vorrichtung, insbesondere eine aktive implantierbare medizinische Vorrichtung, und anderseits einen Apparat umfasst, welcher ein externes Programmiergerät dieser autonomen Vorrichtung bildet, die durch eine synchrone serielle Datenübertragungsverbindung miteinander verbunden sind,

- wobei die autonome Vorrichtung (10) umfasst:

   · einen Taktgeber (18),
   · Mittel zum Aussenden von Signalen in Richtung des Programmiergeräts, oder zum Empfang von Signalen, die vom Programmiergerät herrühren, wobei diese Mittel durch den Taktgeber der autonomen Vorrichtung zeitlich gesteuert werden, und
   · Mittel zum Aussenden eines Synchronisationsrahmens (132) in Richtung des Programmiergeräts, um anfänglichen Gleichlauf herzustellen,

- wobei das Programmiergerät (24) umfasst:

   · einen programmierbaren Taktgeber (42), der in der Phase einstellbar ist,
   · Mittel zum Aussenden von Signalen in Richtung der autonomen Vorrichtung, oder zum Empfang von Signalen, die von der autonomen Vorrichtung herrühren, wobei diese Mittel durch den Taktgeber des Programmiergeräts zeitlich gesteuert werden, und
   · Mittel zur Steuerung der Synchronisation (32, 36, 38, 40), die mit dem programmierbaren Taktgeber zusammenwirken, dazu geeignet, den Synchronisationsrahmen (132) zu analysieren, der von der autonomen Vorrichtung empfangen wurde und diesen programmierbaren Taktgeber mit dem Taktgeber der autonomen Vorrichtung phasengleich zu machen,

wobei die Anordnung **dadurch gekennzeichnet ist, dass**:

- die Verbindung zum Austausch von Daten zwischen der autonomen Vorrichtung und dem Programmiergerät eine bidirektionale Verbindung ist,
- der Synchronisationsrahmen (132) ein wiederkehrendes Signal ($S_j$) umfasst, und
- die Mittel zur Kontrolle der Synchronisation des Programmiergeräts (32, 36, 38, 40) Mittel zur Berechnung einer Korrelation zwischen dem empfangenen wiederkehrenden Signal ($S_j$) und einem Referenzmuster ($T_j$), zum Herleiten einer Verschiebung (l) als Vorsprung oder Verspätung hieraus und zum Verschieben des programmierbaren Takts um einen dieser Verschiebung entsprechenden Wert.

**2.** Anordnung nach Anspruch 1, in welcher der Synchronisationsrahmen (132) durch die autonome Vorrichtung in Antwort auf ein Abfragesignal (130) ausgesendet wird, das durch das Programmiergerät ausgesendet wird, wobei dieses Abfragesignal durch die autonome Vorrichtung erkennbar ist, selbst bei Abwesenheit eines Gleichlaufs in der Übertragung.

**3.** Anordnung nach Anspruch 1, in welcher die Mittel zur Stcuerung der Synchronisation des Programmiergeräts Mittel zum Mitteln des wiederkehrenden Signals vor Korrelation mit dem Referenzmuster umfassen.

**4.** Anordnung nach Anspruch 1, in welcher, um den Gleichlauf beizubehalten, sobald er hergestellt wurde, die Mittel zur Steuerung der Synchronisation des Programmiergeräts Mittel zum Empfangen eines Rahmens von Daten umfassen, welcher durch die autonome Vorrichtung ausgesendet wird, zum Korrelieren der periodischen Erweiterung eines Abtastwerts des empfangenen Signals ($<S>_j$) mit einem Referenzmuster, zum Herleiten einer zeitlichen Verschiebung (1) hieraus und zum Wiederverschieben des programmierbaren Takts um einen dieser Verschiebung entsprechenden Wert.

**5.** Externes Programmiergerät für eine autonome Vorrichtung (10), insbesondere eine aktive implantierbare medizinische Vorrichtung (10), die mit einem Programmiergerät über eine synchrone serielle Verbindung zum Austausch von Daten verbunden ist, wobei die autonome Vorrichtung umfasst:

- einen Taktgeber (18),
- Mittel zum Aussenden von Signalen in Richtung des Programmiergeräts, oder zum Empfang von Signalen, die vom Programmiergerät herrühren, wobei diese Mittel durch den Taktgeber der autonomen Vorrichtung zeitlich gesteuert werden, und
- Mittel zum Aussenden eines Synchronisationsrahmens (132) in Richtung des Programmiergeräts, um einen anfänglichen Gleichlauf herzustellen,

wobei das Programmiergerät umfasst:

- einen programmierbaren Taktgeber (42), der in der Phase einstellbar ist,
- Mittel zum Aussenden von Signalen in Richtung der autonomen Vorrichtung, oder zum Empfang von Signalen, die von der autonomen Vorrichtung hertühren, wobei diese Mittel durch den Taktgeber des Programmiergeräts zeitlich gesteuert werden, und
- Mittel zur Steuerung der Synchronisation (32, 36, 38, 40), die mit dem programmierbaren Taktgeber zusammenwirken, dazu geeignet, den Synchronisationsrahmen (32) zu analysieren, der von der autonomen Vorrichtung empfangen wurde, und diesen programmierbaren Taktgeber mit dem Taktgeber der autonomen Vorrichtung phasengleich zu machen,

wobei das Programmiergerät **dadurch gekennzeichnet ist, dass** die Mittel zur Steuerung der Synchronisation des Programmiergeräts (32, 36, 38, 40) Mittel zum Berechnen einer Korrelation zwischen einem wiederkehrenden Signal ($S_j$) aufweisen, welches in dem Synchronisationsrahmen (132) enthalten ist, und einem Referenzmuster ($T_j$), zum Herleiten einer Verschiebung (I) als Vorsprung oder als Verzögerung, und zum Verschieben des programmierbaren Takts um einen dieser Verschiebung entsprechenden Wert.

**6.** Programmiergerät gemäß Anspruch 5, in welchem, um den Gleichlauf beizubehalten sobald er hergestellt ist, die Mittel zur Steuerung der Synchronisation Mittel zum Empfang eines Rahmens von Daten umfassen, welcher durch die autonome Vorrichtung ausgesendet wurde, zum Korrelieren der periodischen Erweiterung eines Abtastwertes des empfangenen Signals ($<S>_j$) mit einem Referenzmuster, zum Herleiten einer zeitlichen Verschiebung (I) hieraus und zum Wiederverschieben des programmierbaren Takts um einen dieser Verschiebung entsprechenden Wert.

7. Programmiergerät gemäß Anspruch 5, in welchem die Mittel zur Steuerung der Synchronisation durch eine programmierbare digitale Schaltung verwirklicht (38) werden, insbesondere einen digitalen Signalprozessor, der unter der Steuerung eines in einen Speicher geladenen Programms arbeitet.

8. Programmiergerät gemäß Anspruch 7, in welchem das Programm zur Steuerung der digitalen Schaltung ein ferngeladenes Programm ist, um dieses Programm ohne materielle Veränderung des Programmiergeräts verändern zu können.

## Claims

1. A set of devices including, on the one hand, an autonomous device, in particular an active implantable medical device and, on the other hand, a device forming an external programmer for said autonomous device, which are coupled by a synchronous serial data exchange link,

   - the autonomous device (10) comprising:

     · a timing clock (18),
     · means for transmitting signals towards the programmer, or for receiving signals originating from the programmer, said means operating under the time control of the timing clock of the autonomous device, and
     · means for transmitting towards the programmer a synchronisation frame (132) for initially establishing the synchronism,

   - the programmer (24) comprising:

     · a phase-adjustable programmable timing dock (42),
     · means for transmitting signals towards the autonomous device, or for receiving signals originating from the autonomous device, said means operating under the time control of the timing clock of the programmer, and
     · synchronisation control means (32, 36, 38, 40) co-operating with the programmable timing clock, adapted to analyse the synchronisation frame (132) received from the autonomous device and to phase-lock said programmable timing clock with respect to the timing dock of the autonomous device,

   said set being **characterised in that**:

   - the data exchange link between the autonomous device and the programmer is a bidirectional link,
   - the synchronisation frame (132) includes a repetitive signal ($S_j$), and
   - the synchronisation control means (32, 36, 38, 40) of the programmer includes means for calculating a correlation between the repetitive signal ($S_j$) received signal and a reference pattern ($T_j$), for determining a forward or reverse shift (I) therefrom, and for offsetting the programmable clock by a value corresponding to said shift.

2. The set of claim 1, wherein the synchronization frame (132) is transmitted by the autonomous device in response to an interrogation signal (130) transmitted by the programmer, said interrogation signal being recognizable by the autonomous device even in the absence of synchronism of the transmission.

3. The set of claim 1, wherein the synchronisation control means of the programmer includes means for averaging the repetitive signal before correlation with the reference pattern.

4. The set of claim 1, wherein, in order to keep the synchronism once the same is established, the synchronisation control means of the programmer includes means for receiving a data frame transmitted by the autonomous device, for correlating the extension by periodicity of a sample of the received signal ($<S>_l$) with a reference pattern, for determining a time shift (I) therefrom, and for offsetting the programmable clock by a value corresponding to said shift.

5. An external programmer for an autonomous device (10), in particular an active implantable medical device (10), coupled to the programmer by a synchronous serial data exchange link, the autonomous device comprising:

   - a timing dock (18),

- means for transmitting signals towards the programmer, or for receiving signals originating from the programmer, said means operating under the time control of the timing clock of the autonomous device, and
- means for transmitting towards the programmer a synchronisation frame (132) for initially establishing the synchronism,

the programmer comprising:

- a phase-adjustable programmable timing clock (42),
- means for transmitting signals towards the autonomous device, or for receiving signals originating from the autonomous device, said means operating under the time control of the timing dock of the programmer, and
- synchronisation control means (32, 36, 38, 40) co-operating with the programmable timing clock, adapted to analyse the synchronisation frame (132) received from the autonomous device and to phase-lock said programmable timing clock with respect to the timing clock of the autonomous device,

said programmer being **characterised in that** the synchronisation control means (32, 36, 38, 40) includes means for calculating a correlation between a repetitive signal ($S_j$) included in the synchronisation frame (132) and a reference pattern ($T_j$), for determining a forward or reverse shift (I) therefrom, and for offsetting the programmable clock by a value corresponding to said shift.

6. The programmer of claim 5, wherein, in order to keep the synchronism once the same is established, the synchronisation control means includes means for receiving a data frame transmitted by the autonomous device, for correlating the extension by periodicity of a sample of the received signal ($<S>_j$) with a reference pattern, for determining a time shift (I) therefrom, and for offsetting the programmable clock by a value corresponding to said shift.

7. The programmer of claim 5, wherein the synchronisation control means are implemented by a programmable digital circuit (38), in particular a digital signal processor operating under the control of a programme stored in a memory.

8. The system of claim 7, wherein the digital circuit control program is a downloaded programme, whereby a modification of said programme is made possible without hardware modification of the programmer.

## FIG_1

FIG_2

FIG_3

FIG_7

FIG_8

FIG_4

(a) I → P

(b) P → I

(c) H(I)

(d) H(P)

132

130

126

128

$T_A$

FIG_5

P

136

138

140

$T_D$

$T_L$

$T_D - T_L$

FIG_6

128

142

θ

θ

TD/N

$T_D$

FIG.9

FIG.10